# EUROPEAN PATENT APPLICATION

(11) **EP 4 521 295 A1**
(43) Date of publication of application: **12.03.2025**
(21) Application number: 23206146.5
(22) Date of filing: 26.10.2023
(51) Int. Cl.: G06F 40/30, G06F 8/30, H04L 41/04

(54) **PROVIDING INTEGRATION WITH A LARGE LANGUAGE MODEL FOR A NETWORK DEVICE**

(30) Priority: 05.09.2023 US 202318460930
(71) Applicant: Juniper Networks, Inc., Sunnyvale, CA 94089 (US)
(72) Inventor: SIMARIA, Nilesh, Sunnyvale, 94089 (US); RAI, Piyush, Sunnyvale, 94089 (US); RAMAMOORTHY, Sai, Sunnyvale, 94089 (US); KUMAR, Sanjay, Sunnyvale, 94089 (US)
(74) Representative: D Young & Co LLP

(57) **Abstract**

A network device may receive code for generating an interface for communicating with a large language model, and may generate the interface based on the code. The network device may provide, to the large language model and via the interface, a question associated with the network device, and may receive, from the large language model, an answer to the question associated with the network device.

## Description

### BACKGROUND

A large language model (LLM) is a type of artificial intelligence that can mimic human intelligence. A large language model may utilize statistical models to analyze vast amounts of data, and to learn patterns and connections between words and phrases.

### SUMMARY

Particular aspects are set out in the appended independent claims. Various optional embodiments are set out in the dependent claims.

Some implementations described herein relate to a method. The method may include receiving code for generating an interface for communicating with a large language model, and generating the interface based on the code. The method may include providing, to the large language model and via the interface, a question associated with a network device, and receiving, from the large language model, an answer to the question associated with the network device.

Some implementations described herein relate to a network device. The network device may include one or more memories and one or more processors. The one or more processors may be configured to receive code for generating an interface for communicating with a large language model, and generate the interface based on the code, wherein the interface is an application programming interface. The one or more processors may be configured to provide, to the large language model, and via the interface, a question associated with the network device, and receive, from the large language model, an answer to the question associated with the network device.

Some implementations described herein relate to a computer-readable medium comprising (e.g. storing and/or conveying) a set of instructions. The set of instructions, when executed by one or more processors of a network device, may cause the network device to receive code for generating an interface for communicating with a large language model, and generate the interface based on the code, wherein the interface is a natural language interface. The set of instructions, when executed by one or more processors of the network device, may cause the network device to provide, to the large language model and via the interface, a question associated with the network device, and receive, from the large language model, an answer to the question associated with the network device.

### BRIEF DESCRIPTION OF THE DRAWINGS

Figs. 1A-1D are diagrams of an example associated with providing integration with a large language model for a network device.
Fig. 2 is a diagram of an example environment in which systems and/or methods described herein may be implemented.
Figs. 3 and 4 are diagrams of example components of one or more devices of Fig. 2.
Fig. 5 is a flowchart of an example process for providing integration with a large language model for a network device.

### DETAILED DESCRIPTION

The following detailed description of example implementations refers to the accompanying drawings. The same reference numbers in different drawings may identify the same or similar elements.

A network may include multiple network devices that need to be managed, configured, monitored, and/or the like. A large language model may provide powerful services that would help with managing, configuring, monitoring, and/or the like network devices. However, currently there is no natural language interface for network devices with a large language model. Thus, current techniques for managing, configuring, monitoring, and/or the like network devices consume computing resources (e.g., processing resources, memory resources, communication resources, and/or the like), networking resources, and/or the like, associated with being unable to utilize a large language model to manage network devices, being unable to utilize a large language model to configure network devices, being unable to utilize a large language model to monitor network devices, failing to integrate network devices with a large language model, and/or the like.

Some implementations described herein relate to a network device that provides integration with a large language model. For example, the network device may receive code for generating an interface for communicating with a large language model, and may generate the interface based on the code. The network device may provide, to the large language model and via the interface, a question associated with the network device, and may receive, from the large language model, an answer to the question associated with the network device.

In this way, the network device provides integration with a large language model. For example, the network device may be provided with an interface (e.g., an application programming interface (API)) that enables the network device to communicate with a large language model. In some implementations, the network device may utilize the API to receive translations (e.g., to other languages) of network device outputs from the large language model. In some implementations, the network device may utilize the API to receive answers to questions associated with configuring the network device from the large language model. In some implementations, the network device may utilize the API to receive an analysis of network device outputs from the large language model. Thus, the network device conserves computing resources, networking resources, and/or the like that would otherwise have been consumed based on being unable to utilize a large language model to manage network devices, being unable to utilize a large language model to configure network devices, being unable to utilize a large language model to monitor network devices, failing to integrate network devices with a large language model, and/or the like.

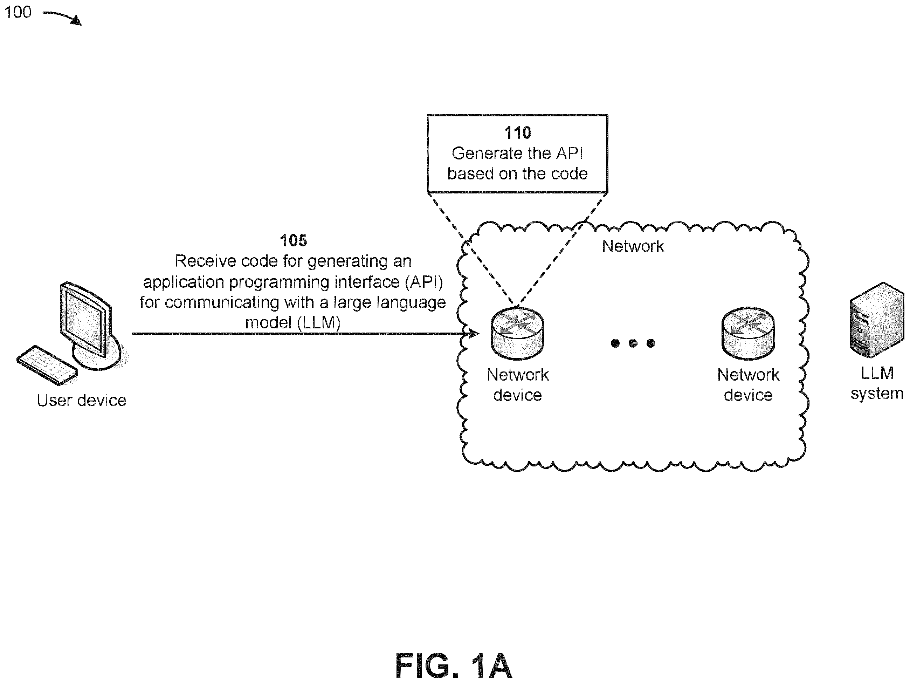

Figs. 1A-1D are diagrams of an example 100 associated with providing integration with a large language model for a network device. As shown in Figs. 1A-1D, example 100 includes a user device and a large language model (LLM) system associated with a network of network devices. Further details of the user device, the large language model system, the network, and the network devices are provided elsewhere herein.

As shown in Fig. 1A, and by reference number 105, the network device may receive code for generating an API for communicating with a large language model. For example, the LLM system may include a large language model, such as an autoregressive language model, an autoencoding language model, a GPT-4 model, a Turing NLG model, a switch transformer model, a fairseq dense model, and/or the like. In order for the network device to communicate with the large language model, the network device may need an interface (e.g., a natural language interface, such as an API) that enables the network device to communicate with the large language model. A user may cause the user device to provide, to the network device, the code for generating the API for communicating with the large language model, and the network device may receive the code for generating the API from the user device. Alternatively, the user may input the code for generating the API for communicating with the large language model directly to the network device (e.g., via a command line interface of the network device).

As further shown in Fig. 1A, and by reference number 110, the network device may generate the API based on the code. For example, the network device may execute the code for generating the API, and may generate the API based on executing the code. In some implementations, when generating the API based on the code, the network device may utilize a command to filter an output of an operational mode command or a configuration mode command to generate the API for communicating with the large language model. In one example, the network device may utilize the following syntax to generate the API:

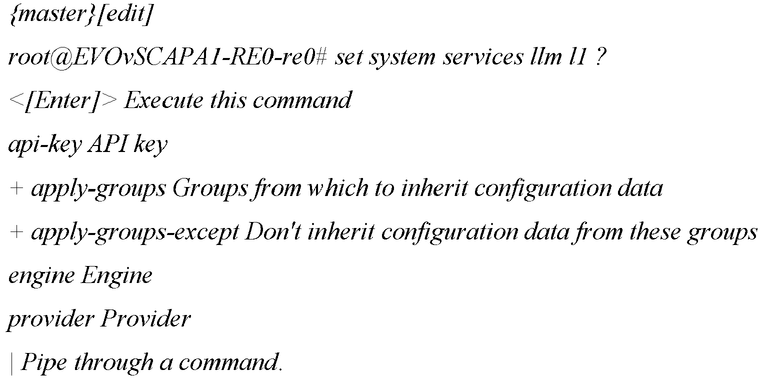

In another example, the network device may utilize the following syntax to generate the API:

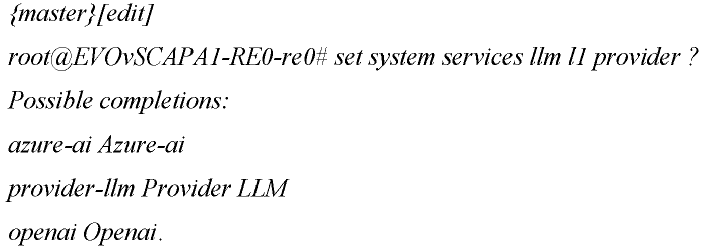

In still another example, the network device may utilize the following syntax to generate the API:

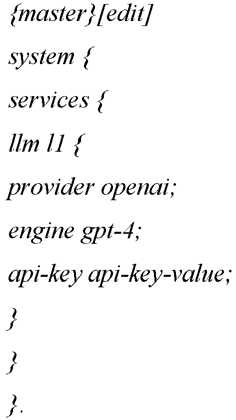

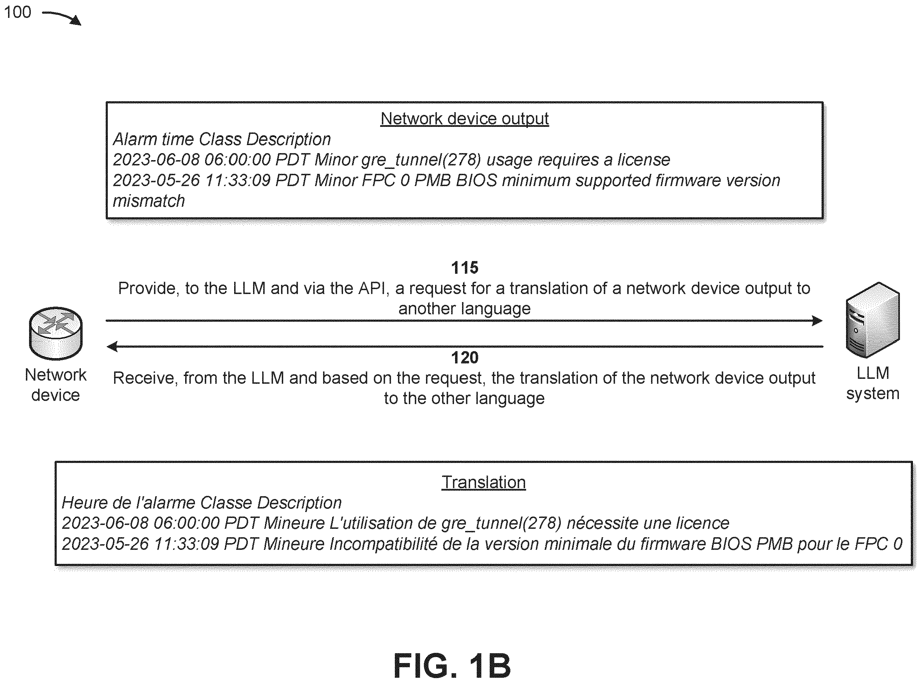

As shown in Fig. 1B, and by reference number 115, the network device may provide, to the large language model and via the API, a request for a translation of a network device output to another language. For example, the network device may utilize the API to communicate with the large language model of the LLM system. The network device may utilize the large language model to perform one or more actions, such as the example actions described herein. In some implementations, a user of the network device may wish to utilize language translation services of the large language model. In such implementations, the network device may generate a request for a translation of a network device output to another language (e.g., a translation from English to French). The request may include the following example information:

```
              root@EVOvSCAPA1-RE0-re0> show chassis alarms | llm l1 prompt "Translate
              this output to French"
              Alarm time Class Description
              2023-06-08 06:00:00 PDTMinor gre_tunnel(278) usage requires a license
              2023-05-26 11:33:09 PDTMinor FPC 0 PMB BIOS minimum supported
              firmware version mismatch.
```

The network device may utilize the API to provide, to the LLM system, the request for the translation of the network device output to the other language.

As further shown in Fig. 1B, and by reference number 120, the network device may receive, from the large language model and based on the request, the translation of the network device output to the other language. For example, the LLM system may receive the request for the translation of the network device output to the other language and may utilize the large language model to perform a translation of the network device output based on the request. In some implementations, the translation of the network device output may include the following information (e.g., in French):

```
              Il y a actuellement 2 alarmes actives.
              Heure de l'alarme Classe Description
              2023-06-08 06:00:00 PDTMineure L'utilisation de gre_tunnel(278) nécessite une
              licence
              2023-05-26 11:33:09 PDTMineure Incompatibilité de la version minimale du
             firmware BIOS PMB pour le FPC 0.
```

The LLM system may provide the translation of the network device output to the other language to the network device, and the network device may receive (e.g., via the API) the translation of the network device output from the LLM system.

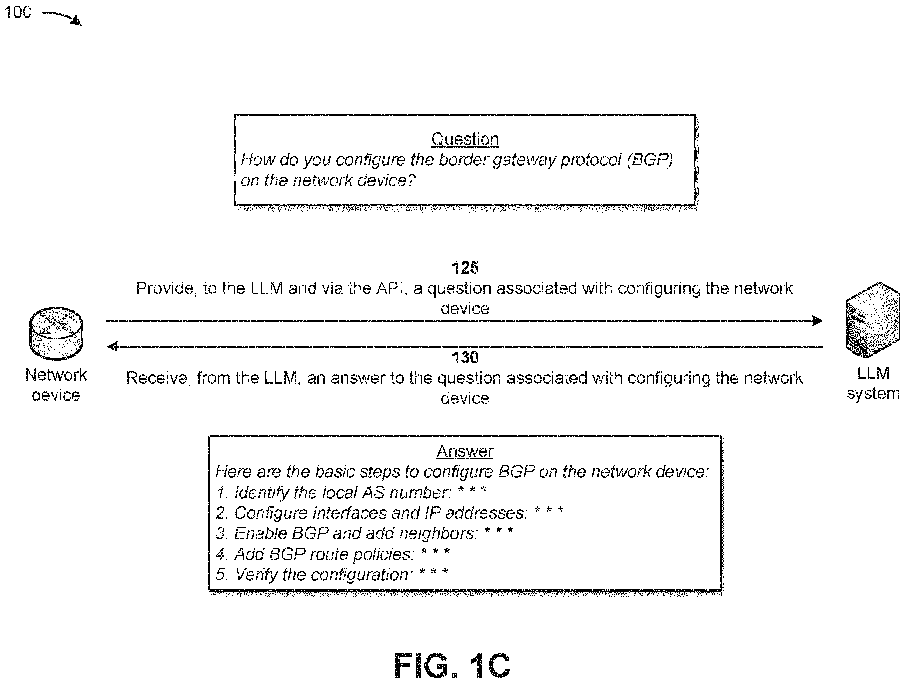

As shown in Fig. 1C, and by reference number 125, the network device may provide, to the large language model and via the API, a question associated with configuring the network device. For example, a user of the network device may wish to ask the large language model a question about configuring the network device. The network device may generate a question associated with configuring the network device (e.g., configuring the border gateway protocol (BGP) on the network device). In some implementations, the question may include the following example information:

```
          root@EVOvSCAPA1-RE0-re0> request llm chat llm-name l1 prompt "How to
          configure the border gateway protocol (BGP) on the network device? "
```

The network device may utilize the API to provide, to the LLM system, the question associated with configuring the network device.

As further shown in Fig. 1C, and by reference number 130, the network device may receive, from the large language model, an answer to the question associated with configuring the network device. For example, the LLM system may receive the question associated with configuring the network device and may utilize the large language model to generate an answer to the question associated with configuring the network device. In some implementations, the answer to the question associated with configuring the network device may include the following information:
*Here are the basic steps to configure BGP on the network device:*

```
              1. Identify the local AS number:
                    set routing-options autonomous-system
              2. Configure interfaces and IP addresses:
                    set interfaces ge-0/0/0 unit 0family inet address /
                    set interfaces ge-0/0/1 unit 0family inet address /
              3. Enable BGP and add neighbors:
                    set protocols bgp group type external
                    set protocols bgp group local-address
                    set protocols bgp group neighbor peer-as
              4. Add BGP route policies:
                    set policy-options policy-statement from protocol bgp
                    set policy-options policy-statement then accept
                    set protocols bgp group export
                    set protocols bgp group import
              5. Verify the configuration:
                    show configuration protocols bgp
                    show bgp summary
```

*Note: These are just the basic steps to configure BGP on Junos. For more details and advanced configurations, please refer to the Junos documentation.*

The LLM system may provide, to the network device, the answer to the question associated with configuring the network device, and the network device may receive (e.g., via the API) the answer to the question associated with configuring the network device from the LLM system.

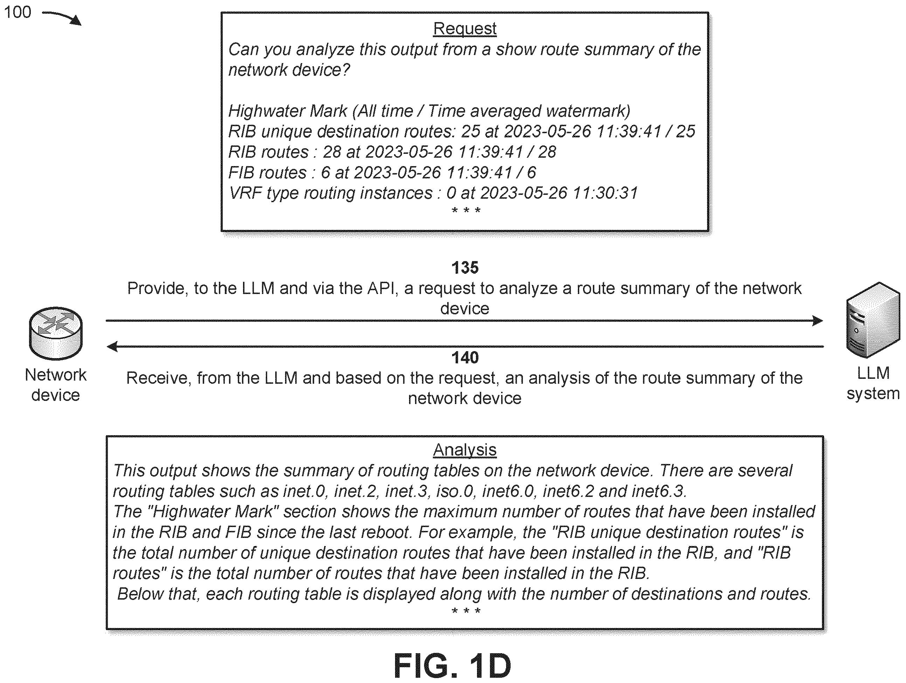

As shown in Fig. 1D, and by reference number 135, the network device may provide, to the large language model and via the API, a request to analyze a route summary of the network device. For example, a user of the network device may wish to have the large language model analyze a route summary of the network device. The network device may generate a request to analyze the route summary of the network device (e.g., configuring the border gateway protocol (BGP) on the network device). In some implementations, the request to analyze the route summary of the network device may include the following example information:

```
              Can you analyze this output from show route summary of the network device?"
              Highwater Mark (All time / Time averaged watermark)
              RIB unique destination routes: 25 at 2023-05-26 11:39:41 125
              RIB routes : 28 at 2023-05-26 11:39:41 128
              FIB routes : 6 at 2023-05-26 11:39:41 / 6
              VRF type routing instances : 0 at 2023-05-26 11:30:31
              ine t. 0: 9 destinations, 10 routes (9 active, 0 holddown, 0 hidden)
                    Direct: 3 routes, 2 active
                    Local: 2 routes, 2 active
                    Static: 5 routes, 5 active
              inet.2: 4 destinations, 5 routes (4 active, 0 holddown, 0 hidden)
                    Direct: 3 routes, 2 active
                    Local: 2 routes, 2 active
              inet.3: 4 destinations, 5 routes (4 active, 0 holddown, 0 hidden)
                    Direct: 3 routes, 2 active
                    Local: 2 routes, 2 active
              iso.0: 1 destinations, 1 routes (1 active, 0 holddown, 0 hidden)
                    Direct: 1 routes, 1 active
              inet6.0: 3 destinations, 3 routes (3 active, 0 holddown, 0 hidden)
                    Direct: 2 routes, 2 active
                    INET6: 1 routes, 1 active
              inet6.2: 2 destinations, 2 routes (2 active, 0 holddown, 0 hidden)
                    Direct: 2 routes, 2 active
              inet6.3: 2 destinations, 2 routes (2 active, 0 holddown, 0 hidden)
                    Direct: 2 routes, 2 active.
```

The network device may utilize the API to provide, to the LLM system, the request to analyze the route summary of the network device.

As further shown in Fig. 1D, and by reference number 140, the network device may receive, from the large language model and based on the request, an analysis of the route summary of the network device. For example, the LLM system may receive the request to analyze the route summary of the network device and may utilize the large language model to generate an analysis of the route summary of the network device. In some implementations, the analysis of the route summary of the network device may include the following information:

```
       This output shows the summary of routing tables on the Juniper device. There are several
       routing tables such as inet. 0, inet.2, inet.3, iso.0, inet6.0, inet6.2 and inet6.3.
       The "Highwater Mark" section shows the maximum number of routes that have been
       installed in the RIB and FIB since the last reboot. For example, the "RIB unique
       destination routes" is the total number of unique destination routes that have been
       installed in the RIB, and "RIB routes" is the total number of routes that have been
       installed in the RIB.
       Below that, each routing table is displayed along with the number of destinations and
       routes. For example, the "inet. 0" table has 9 destinations and 10 routes, out of which 9
       are active and none are in a hold down state or hidden. The same is true for the other
       routing tables as well.
       The purpose of the "inet" tables is to
store IP routes, "iso" is for ISO routes, and "inet6"
       is for IPv6 routes.
       Overall, this output provides a quick and summarized overview of the routing tables and
       the number of routes in each table currently active.
```

The LLM system may provide, to the network device, the analysis of the route summary of the network device, and the network device may receive (e.g., via the API) the analysis of the route summary of the network device from the LLM system.

In some implementations, a user of the network device may wish to utilize the large language model to configure the network device. In such implementations, the network device may generate a request to configure the network device, and may provide, to the LLM system and via the API, the request to configure the network device. The LLM system may receive the request to configure the network device, and may utilize the large language model to generate instructions for configuring the network device based on the request. The LLM system may provide, to the network device, the instructions for configuring the network device, and the network device may receive (e.g., via the API) the instructions for configuring the network device. The network device may utilize the instructions to configure the network device.

In some implementations, a user of the network device may wish to utilize the large language model to request troubleshooting of the network device. In such implementations, the network device may generate a request to troubleshoot the network device, and may provide, to the LLM system and via the API, the request to troubleshoot the network device. The LLM system may receive the request to troubleshoot the network device, and may utilize the large language model to generate, based on the request, a response identifying one or more issues associated with the network device. The LLM system may provide, to the network device, the response identifying the one or more issues associated with the network device, and the network device may receive (e.g., via the API) the response identifying the one or more issues associated with the network device. The network device may utilize the response to address the one or more issues associated with the network device.

In some implementations, a user of the network device may wish to utilize the large language model to request troubleshooting of the network device. In such implementations, the network device may generate a request to troubleshoot the network device, and may provide, to the LLM system and via the API, the request to troubleshoot the network device. The LLM system may receive the request to troubleshoot the network device, and may utilize the large language model to generate, based on the request, instructions that cause the network device to correct one or more issues associated with the network device. The LLM system may provide, to the network device, the instructions that cause the network device to correct the one or more issues associated with the network device, and the network device may receive (e.g., via the API) the instructions that cause the network device to correct the one or more issues associated with the network device. The network device may utilize the instructions to correct the one or more issues associated with the network device.

In some implementations, a user of the network device may wish to utilize the large language model to onboard the network device with a network. In such implementations, the network device may generate a request to onboard the network device with the network, and may provide, to the LLM system and via the API, the request to onboard the network device with the network. The LLM system may receive the request to onboard the network device with the network, and may utilize the large language model to generate, based on the request, instructions that cause the network device to onboard the network device with the network. The LLM system may provide, to the network device, the instructions that cause the network device to onboard the network device with the network, and the network device may receive (e.g., via the API) the instructions that cause the network device to onboard the network device with the network. The network device may utilize the instructions to onboard the network device with the network.

In some implementations, a user of the network device may wish to utilize the large language model to request an analysis of an output of the network device. In such implementations, the network device may generate a request to analyze the output of the network device, and may provide, to the LLM system and via the API, the request to analyze the output of the network device. The LLM system may receive the request to analyze the output of the network device, and may utilize the large language model to generate, based on the request, an analysis of the output of the network device. The LLM system may provide, to the network device, the analysis of the output of the network device, and the network device may receive (e.g., via the API) the analysis of the output of the network device. The network device may utilize the analysis to address the one or more issues associated with the output of the network device.

In some implementations, a user of the network device may wish to utilize the large language model to request an analysis of traffic associated with the network device. In such implementations, the network device may generate a request to analyze the traffic associated with the network device, and may provide, to the LLM system and via the API, the request to analyze the traffic associated with the network device. The LLM system may receive the request to analyze the traffic associated with the network device, and may utilize the large language model to generate, based on the request, an analysis of the traffic associated with the network device. The LLM system may provide, to the network device, the analysis of the traffic associated with the network device, and the network device may receive (e.g., via the API) the analysis of the traffic associated with the network device. The network device may utilize the analysis to address the one or more traffic issues associated with the output of the network device (e.g., load balancing, congestion, and/or the like).

In some implementations, a user of the network device may wish to utilize the large language model to request offloading of traffic associated with the network device. In such implementations, the network device may generate a request to offload the traffic associated with the network device, and may provide, to the LLM system and via the API, the request to offload the traffic associated with the network device. The LLM system may receive the request to offload the traffic associated with the network device, and may utilize the large language model to generate, based on the request, instructions that cause the network device to offload the traffic of the network device to another network device. The LLM system may provide, to the network device, the instructions that cause the network device to offload the traffic of the network device to another network device, and the network device may receive (e.g., via the API) the instructions that cause the network device to offload the traffic of the network device to another network device. The network device may utilize the instructions to offload the traffic of the network device to the other network device.

In this way, the network device provides integration with a large language model. For example, the network device may be provided with an interface (e.g., an API that enables the network device to communicate with a large language model. In some implementations, the network device may utilize the API to receive translations (e.g., to other languages) of network device outputs from the large language model. In some implementations, the network device may utilize the API to receive answers to questions associated with configuring the network device from the large language model. In some implementations, the network device may utilize the API to receive an analysis of network device outputs from the large language model. Thus, the network device conserves computing resources, networking resources, and/or the like that would otherwise have been consumed based on being unable to utilize a large language model to manage network devices, being unable to utilize a large language model to configure network devices, being unable to utilize a large language model to monitor network devices, failing to integrate network devices with a large language model, and/or the like.

As indicated above, Figs. 1A-1D are provided as an example. Other examples may differ from what is described with regard to Figs. 1A-1D. The number and arrangement of devices shown in Figs. 1A-1D are provided as an example. In practice, there may be additional devices, fewer devices, different devices, or differently arranged devices than those shown in Figs. 1A-1D. Furthermore, two or more devices shown in Figs. 1A-1D may be implemented within a single device, or a single device shown in Figs. 1A-1D may be implemented as multiple, distributed devices. Additionally, or alternatively, a set of devices (e.g., one or more devices) shown in Figs. 1A-1D may perform one or more functions described as being performed by another set of devices shown in Figs. 1A-1D.

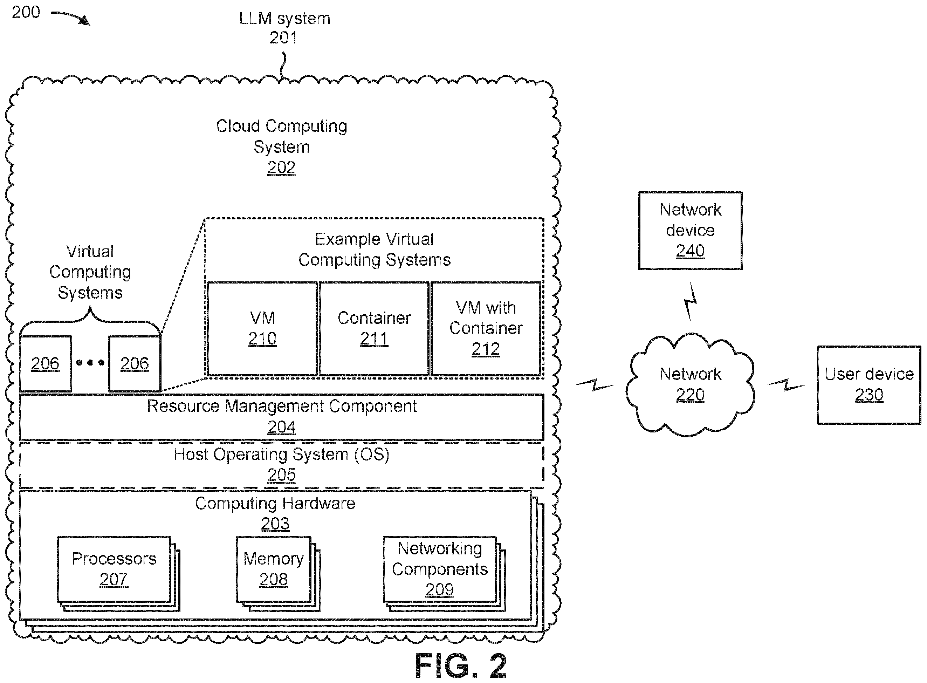

Fig. 2 is a diagram of an example environment 200 in which systems and/or methods described herein may be implemented. As shown in Fig. 2, the environment 200 may include a large language model system 201, which may include one or more elements of and/or may execute within a cloud computing system 202. The cloud computing system 202 may include one or more elements 203-212, as described in more detail below. As further shown in Fig. 2, the environment 200 may include a network 220, a user device 230, and/or a network device 240. Devices and/or elements of the environment 200 may interconnect via wired connections and/or wireless connections.

The cloud computing system 202 may include computing hardware 203, a resource management component 204, a host operating system (OS) 205, and/or one or more virtual computing systems 206. The cloud computing system 202 may execute on, for example, an Amazon Web Services platform, a Microsoft Azure platform, or a Snowflake platform. The resource management component 204 may perform virtualization (e.g., abstraction) of the computing hardware 203 to create the one or more virtual computing systems 206. Using virtualization, the resource management component 204 enables a single computing device (e.g., a computer or a server) to operate like multiple computing devices, such as by creating multiple isolated virtual computing systems 206 from the computing hardware 203 of the single computing device. In this way, the computing hardware 203 can operate more efficiently, with lower power consumption, higher reliability, higher availability, higher utilization, greater flexibility, and lower cost than using separate computing devices.

The computing hardware 203 may include hardware and corresponding resources from one or more computing devices. For example, the computing hardware 203 may include hardware from a single computing device (e.g., a single server) or from multiple computing devices (e.g., multiple servers), such as multiple computing devices in one or more data centers. As shown, the computing hardware 203 may include one or more processors 207, one or more memories 208, and/or one or more networking components 209. Examples of a processor, a memory, and a networking component (e.g., a communication component) are described elsewhere herein.

The resource management component 204 may include a virtualization application (e.g., executing on hardware, such as the computing hardware 203) capable of virtualizing the computing hardware 203 to start, stop, and/or manage one or more virtual computing systems 206. For example, the resource management component 204 may include a hypervisor (e.g., a bare-metal or Type 1 hypervisor, a hosted or Type 2 hypervisor, or another type of hypervisor) or a virtual machine monitor, such as when the virtual computing systems 206 are virtual machines 210. Additionally, or alternatively, the resource management component 204 may include a container manager, such as when the virtual computing systems 206 are containers 211. In some implementations, the resource management component 204 executes within and/or in coordination with a host operating system 205.

A virtual computing system 206 may include a virtual environment that enables cloud-based execution of operations and/or processes described herein using the computing hardware 203. As shown, a virtual computing system 206 may include a virtual machine 210, a container 211, or a hybrid environment 212 that includes a virtual machine and a container, among other examples. A virtual computing system 206 may execute one or more applications using a file system that includes binary files, software libraries, and/or other resources required to execute applications on a guest operating system (e.g., within the virtual computing system 206) or the host operating system 205.

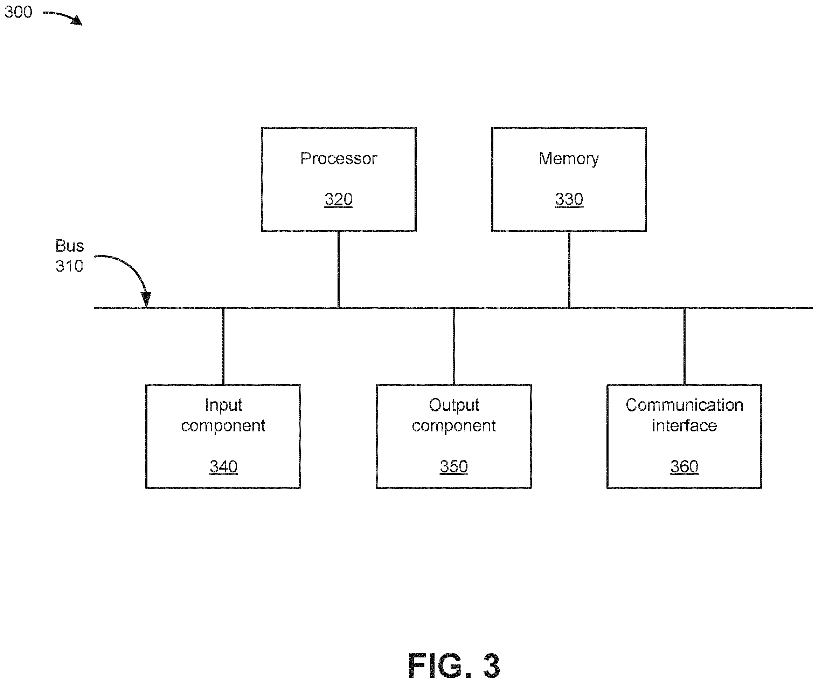

Although the large language model system 201 may include one or more elements 203-212 of the cloud computing system 202, may execute within the cloud computing system 202, and/or may be hosted within the cloud computing system 202, in some implementations, the large language model system 201 may not be cloud-based (e.g., may be implemented outside of a cloud computing system) or may be partially cloud-based. For example, the large language model system 201 may include one or more devices that are not part of the cloud computing system 202, such as a device 300 of Fig. 3, which may include a standalone server or another type of computing device. The large language model system 201 may perform one or more operations and/or processes described in more detail elsewhere herein.

The network 220 may include one or more wired and/or wireless networks. For example, the network 220 may include a cellular network, a public land mobile network (PLMN), a local area network (LAN), a wide area network (WAN), a private network, the Internet, and/or a combination of these or other types of networks. The network 220 enables communication among the devices of the environment 200.

The user device 230 may include one or more devices capable of receiving, generating, storing, processing, and/or providing information, as described elsewhere herein. The user device 230 may include a communication device and/or a computing device. For example, the user device 230 may include a wireless communication device, a mobile phone, a user equipment, a laptop computer, a tablet computer, a desktop computer, a gaming console, a set-top box, a wearable communication device (e.g., a smart wristwatch, a pair of smart eyeglasses, a head mounted display, or a virtual reality headset), or a similar type of device.

The network device 240 may include one or more devices capable of receiving, processing, storing, routing, and/or providing traffic (e.g., a packet and/or other information or metadata) in a manner described herein. For example, the network device 240 may include a router, such as a label switching router (LSR), a label edge router (LER), an ingress router, an egress router, a provider router (e.g., a provider edge router or a provider core router), a virtual router, or another type of router. Additionally, or alternatively, the network device 240 may include a gateway, a switch, a firewall, a hub, a bridge, a reverse proxy, a server (e.g., a proxy server, a cloud server, or a data center server), a load balancer, and/or a similar device. In some implementations, the network device 240 may be a physical device implemented within a housing, such as a chassis. In some implementations, the network device 240 may be a virtual device implemented by one or more computing devices of a cloud computing environment or a data center. In some implementations, a group of network devices 240 may be a group of data center nodes that are used to route traffic flow through a network.

The number and arrangement of devices and networks shown in Fig. 2 are provided as an example. In practice, there may be additional devices and/or networks, fewer devices and/or networks, different devices and/or networks, or differently arranged devices and/or networks than those shown in Fig. 2. Furthermore, two or more devices shown in Fig. 2 may be implemented within a single device, or a single device shown in Fig. 2 may be implemented as multiple, distributed devices. Additionally, or alternatively, a set of devices (e.g., one or more devices) of the environment 200 may perform one or more functions described as being performed by another set of devices of the environment 200.

Fig. 3 is a diagram of example components of one or more devices of Fig. 2. The example components may be included in a device 300, which may correspond to the large language model system 201, the user device 230, and/or the network device 240. In some implementations, the large language model system 201, the user device 230, and/or the network device 240 may include one or more devices 300 and/or one or more components of the device 300. As shown in Fig. 3, the device 300 may include a bus 310, a processor 320, a memory 330, an input component 340, an output component 350, and a communication interface 360.

The bus 310 includes one or more components that enable wired and/or wireless communication among the components of the device 300. The bus 310 may couple together two or more components of Fig. 3, such as via operative coupling, communicative coupling, electronic coupling, and/or electric coupling. The processor 320 includes a central processing unit (CPU), a graphics processing unit (GPU), a microprocessor, a controller, a microcontroller, a digital signal processor (DSP), a field-programmable gate array (FPGA), an application-specific integrated circuit (ASIC), and/or another type of processing component. The processor 320 is implemented in hardware, firmware, or a combination of hardware and software. In some implementations, the processor 320 includes one or more processors capable of being programmed to perform one or more operations or processes described elsewhere herein.

The memory 330 includes volatile and/or nonvolatile memory. For example, the memory 330 may include random access memory (RAM), read only memory (ROM), a hard disk drive, and/or another type of memory (e.g., a flash memory, a magnetic memory, and/or an optical memory). The memory 330 may include internal memory (e.g., RAM, ROM, or a hard disk drive) and/or removable memory (e.g., removable via a universal serial bus connection). The memory 330 may be a non-transitory computer-readable medium. The memory 330 stores information, instructions, and/or software (e.g., one or more software applications) related to the operation of the device 300. In some implementations, the memory 330 includes one or more memories that are coupled to one or more processors (e.g., the processor 320), such as via the bus 310.

The input component 340 enables the device 300 to receive input, such as user input and/or sensed input. For example, the input component 340 may include a touch screen, a keyboard, a keypad, a mouse, a button, a microphone, a switch, a sensor, a global positioning system sensor, an accelerometer, a gyroscope, and/or an actuator. The output component 350 enables the device 300 to provide output, such as via a display, a speaker, and/or a light-emitting diode. The communication interface 360 enables the device 300 to communicate with other devices via a wired connection and/or a wireless connection. For example, the communication interface 360 may include a receiver, a transmitter, a transceiver, a modem, a network interface card, and/or an antenna.

The device 300 may perform one or more operations or processes described herein. For example, a computer-readable medium (e.g., the memory 330) may store a set of instructions (e.g., one or more instructions or code) for execution by the processor 320. The processor 320 may execute the set of instructions to perform one or more operations or processes described herein. In some implementations, execution of the set of instructions, by one or more processors 320, causes the one or more processors 320 and/or the device 300 to perform one or more operations or processes described herein. In some implementations, hardwired circuitry may be used instead of or in combination with the instructions to perform one or more operations or processes described herein. Additionally, or alternatively, the processor 320 may be configured to perform one or more operations or processes described herein. Thus, implementations described herein are not limited to any specific combination of hardware circuitry and software.

The number and arrangement of components shown in Fig. 3 are provided as an example. The device 300 may include additional components, fewer components, different components, or differently arranged components than those shown in Fig. 3. Additionally, or alternatively, a set of components (e.g., one or more components) of the device 300 may perform one or more functions described as being performed by another set of components of the device 300.

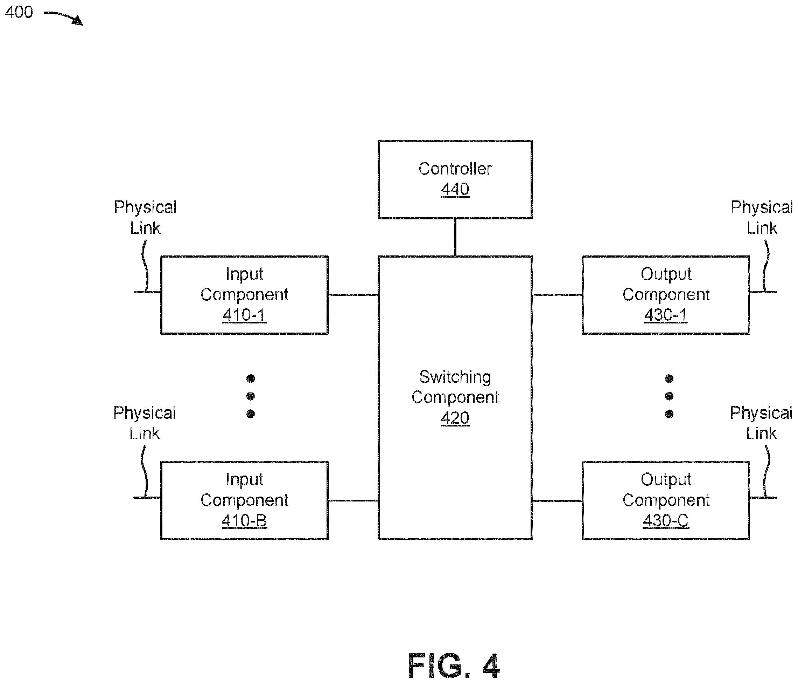

Fig. 4 is a diagram of example components of one or more devices of Fig. 2. The example components may be included in a device 400. The device 400 may correspond to the network device 240. In some implementations, the network device 240 may include one or more devices 400 and/or one or more components of the device 400. As shown in Fig. 4, the device 400 may include one or more input components 410-1 through 410-B (B ≥ 1) (hereinafter referred to collectively as input components 410, and individually as input component 410), a switching component 420, one or more output components 430-1 through 430-C (C ≥ 1) (hereinafter referred to collectively as output components 430, and individually as output component 430), and a controller 440.

The input component 410 may be one or more points of attachment for physical links and may be one or more points of entry for incoming traffic, such as packets. The input component 410 may process incoming traffic, such as by performing data link layer encapsulation or decapsulation. In some implementations, the input component 410 may transmit and/or receive packets. In some implementations, the input component 410 may include an input line card that includes one or more packet processing components (e.g., in the form of integrated circuits), such as one or more interface cards (IFCs), packet forwarding components, line card controller components, input ports, processors, memories, and/or input queues. In some implementations, the device 400 may include one or more input components 410.

The switching component 420 may interconnect the input components 410 with the output components 430. In some implementations, the switching component 420 may be implemented via one or more crossbars, via busses, and/or with shared memories. The shared memories may act as temporary buffers to store packets from the input components 410 before the packets are eventually scheduled for delivery to the output components 430. In some implementations, the switching component 420 may enable the input components 410, the output components 430, and/or the controller 440 to communicate with one another.

The output component 430 may store packets and may schedule packets for transmission on output physical links. The output component 430 may support data link layer encapsulation or decapsulation, and/or a variety of higher-level protocols. In some implementations, the output component 430 may transmit packets and/or receive packets. In some implementations, the output component 430 may include an output line card that includes one or more packet processing components (e.g., in the form of integrated circuits), such as one or more IFCs, packet forwarding components, line card controller components, output ports, processors, memories, and/or output queues. In some implementations, the device 400 may include one or more output components 430. In some implementations, the input component 410 and the output component 430 may be implemented by the same set of components (e.g., and input/output component may be a combination of the input component 410 and the output component 430).

The controller 440 includes a processor in the form of, for example, a CPU, a GPU, an accelerated processing unit (APU), a microprocessor, a microcontroller, a DSP, an FPGA, an ASIC, and/or another type of processor. The processor is implemented in hardware, firmware, or a combination of hardware and software. In some implementations, the controller 440 may include one or more processors that can be programmed to perform a function.

In some implementations, the controller 440 may include a RAM, a ROM, and/or another type of dynamic or static storage device (e.g., a flash memory, a magnetic memory, an optical memory, etc.) that stores information and/or instructions for use by the controller 440.

In some implementations, the controller 440 may communicate with other devices, networks, and/or systems connected to the device 400 to exchange information regarding network topology. The controller 440 may create routing tables based on the network topology information, may create forwarding tables based on the routing tables, and may forward the forwarding tables to the input components 410 and/or output components 430. The input components 410 and/or the output components 430 may use the forwarding tables to perform route lookups for incoming and/or outgoing packets.

The controller 440 may perform one or more processes described herein. The controller 440 may perform these processes in response to executing software instructions received from a computer-readable medium. A computer readable medium may take the form of a computer-readable storage medium and/or a computer-readable transmission medium. A computer-readable storage medium may be referred to as a non-transitory computer-readable medium. A computer-readable storage medium is defined herein as a non-transitory memory device. A memory device includes memory space within a single physical storage device or memory space spread across multiple physical storage devices. Examples of a computer-readable storage medium may include a CD, a DVD, a storage device, a diskette, a tape, flash memory, physical memory, or any other computer-readable storage medium. A transmission medium may include any medium by which instructions may be conveyed. A computer-readable transmission medium may include carrier waves, transmission signals or the like. A computer-readable transmission medium may convey instructions between components of a single computer system (e.g. via a bus, such as bus 310) and/or between plural separate computer systems (e.g. via a communications link, such as may be accessed by communication interface 360).

Software instructions may be read into a memory and/or storage component associated with the controller 440 from another computer-readable medium or from another device via a communication interface. When executed, software instructions stored in a memory and/or storage component associated with the controller 440 may cause the controller 440 to perform one or more processes described herein. Additionally, or alternatively, hardwired circuitry may be used in place of or in combination with software instructions to perform one or more processes described herein. Thus, implementations described herein are not limited to any specific combination of hardware circuitry and software.

The number and arrangement of components shown in Fig. 4 are provided as an example. In practice, the device 400 may include additional components, fewer components, different components, or differently arranged components than those shown in Fig. 4. Additionally, or alternatively, a set of components (e.g., one or more components) of the device 400 may perform one or more functions described as being performed by another set of components of the device 400.

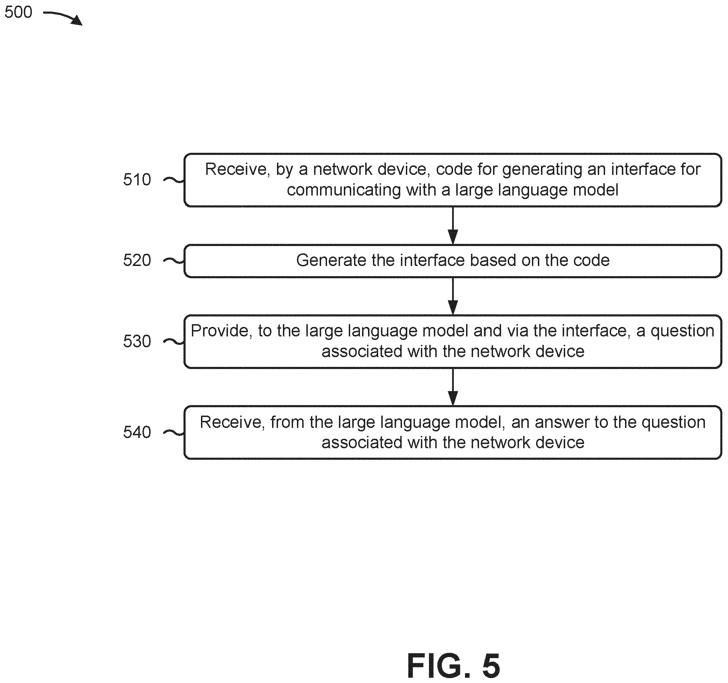

Fig. 5 is a flowchart of an example process 500 for providing integration with a large language model for a network device. In some implementations, one or more process blocks of Fig. 5 may be performed by a network device (e.g., the network device 240). In some implementations, one or more process blocks of Fig. 5 may be performed by another device or a group of devices separate from or including the network device, such as a large language model system (e.g., the large language model system 201). Additionally, or alternatively, one or more process blocks of Fig. 5 may be performed by one or more components of the device 300, such as the processor 320, the memory 330, the input component 340, the output component 350, and/or the communication interface 360. Additionally, or alternatively, one or more process blocks of Fig. 5 may be performed by one or more components of the device 400, such as the input component 410, THE switching component 420, the output component 430, and/or the controller 440.

As shown in Fig. 5, process 500 may include receiving code for generating an interface for communicating with a large language model (block 510). For example, the network device may receive code for generating an interface for communicating with a large language model, as described above. In some implementations, the interface is an application programming interface.

As further shown in Fig. 5, process 500 may include generating the interface based on the code (block 520). For example, the network device may generate the interface based on the code, as described above. In some implementations, generating the interface based on the code includes filtering an output of an operational mode command or a configuration mode command to generate the interface for communicating with the large language model.

As further shown in Fig. 5, process 500 may include providing, to the large language model and via the interface, a question associated with the network device (block 530). For example, the network device may provide to the large language model, and via the interface, a question associated with the network device, as described above.

As further shown in Fig. 5, process 500 may include receiving, from the large language model, an answer to the question associated with the network device (block 540). For example, the network device may receive, from the large language model, an answer to the question associated with the network device, as described above.

In some implementations, process 500 includes providing, to the large language model and via the interface, a request for a translation of an output of the network device to another language, and receiving, from the large language model and based on the request, the translation of the output to the other language. In some implementations, process 500 includes providing, to the large language model and via the interface, a question associated with configuring the network device, and receiving, from the large language model, an answer to the question associated with configuring the network device.

In some implementations, process 500 includes providing, to the large language model and via the interface, a request to analyze a route summary of the network device, and receiving, from the large language model and based on the request, an analysis of the route summary of the network device. In some implementations, process 500 includes providing, to the large language model and via the interface, a request for instructions to configure the network device, and receiving, from the large language model and based on the request, instructions for configuring the network device.

In some implementations, process 500 includes providing, to the large language model and via the interface, a request to troubleshoot the network device, and receiving, from the large language model and based on the request, a response identifying one or more issues associated with the network device. In some implementations, process 500 includes providing, to the large language model and via the interface, a request to troubleshoot the network device, and receiving, from the large language model and based on the request, instructions that cause the network device to correct one or more issues associated with the network device.

In some implementations, process 500 includes providing, to the large language model and via the interface, a request for instructions to onboard the network device with a network, and receiving, from the large language model and based on the request, instructions that cause the network device to onboard with the network. In some implementations, process 500 includes providing, to the large language model and via the interface, a request to analyze an output of the network device, and receiving, from the large language model and based on the request, an analysis of the output of the network device.

In some implementations, process 500 includes providing, to the large language model and via the interface, a request to analyze traffic associated with the network device, and receiving, from the large language model and based on the request, an analysis of the traffic associated with the network device. In some implementations, process 500 includes providing, to the large language model and via the interface, a request for instructions to offload traffic of the network device, and receiving, from the large language model and based on the request, instructions that cause the network device to offload the traffic of the network device to another network device.

Although Fig. 5 shows example blocks of process 500, in some implementations, process 500 may include additional blocks, fewer blocks, different blocks, or differently arranged blocks than those depicted in Fig. 5. Additionally, or alternatively, two or more of the blocks of process 500 may be performed in parallel.

Therefore, from one perspective, there have been described approaches for a network device that may receive code for generating an interface for communicating with a large language model, and may generate the interface based on the code. The network device may provide, to the large language model and via the interface, a question associated with the network device, and may receive, from the large language model, an answer to the question associated with the network device.

Further examples are set out in the following numbered clauses.

Clause 1. A method, comprising: receiving, by a network device, code for generating an interface for communicating with a large language model; generating, by the network device, the interface based on the code; providing, by the network device, to the large language model, and via the interface, a question associated with the network device; and receiving, by the network device and from the large language model, an answer to the question associated with the network device.

Clause 2. The method of clause 1, further comprising: providing, to the large language model and via the interface, a request for a translation of an output of the network device to another language; and receiving, from the large language model and based on the request, the translation of the output to the other language.

Clause 3. The method of clause 1 or 2, further comprising: providing, to the large language model and via the interface, a question associated with configuring the network device; and receiving, from the large language model, an answer to the question associated with configuring the network device.

Clause 4. The method of clause 1, 2 or 3, further comprising: providing, to the large language model and via the interface, a request to analyze a route summary of the network device; and receiving, from the large language model and based on the request, an analysis of the route summary of the network device.

Clause 5. The method of any of clauses 1 to 4, wherein generating the interface based on the code comprises: filtering an output of an operational mode command or a configuration mode command to generate the interface for communicating with the large language model.

Clause 6. The method of any of clauses 1 to 5, wherein the interface is an application programming interface.

Clause 7. The method of any of clauses 1 to 6, further comprising: providing, to the large language model and via the interface, a request for instructions to configure the network device; and receiving, from the large language model and based on the request, instructions for configuring the network device.

Clause 8. A network device, comprising: one or more memories; and one or more processors to: receive code for generating an interface for communicating with a large language model; generate the interface based on the code, wherein the interface is an application programming interface; provide, to the large language model and via the interface, a question associated with the network device; and receive, from the large language model, an answer to the question associated with the network device.

Clause 9. The network device of clause 8, wherein the one or more processors are further to: provide, to the large language model and via the interface, a request to troubleshoot the network device; and receive, from the large language model and based on the request, a response identifying one or more issues associated with the network device.

Clause 10. The network device of clause 8 or 9, wherein the one or more processors are further to: provide, to the large language model and via the interface, a request to troubleshoot the network device; and receive, from the large language model and based on the request, instructions that cause the network device to correct one or more issues associated with the network device.

Clause 11. The network device of clause 8, 9 or 10, wherein the one or more processors are further to: provide, to the large language model and via the interface, a request for instructions to onboard the network device with a network; and receive, from the large language model and based on the request, instructions that cause the network device to onboard with the network.

Clause 12. The network device of any of clauses 8 to 11, wherein the one or more processors are further to: provide, to the large language model and via the interface, a request to analyze an output of the network device; and receive, from the large language model and based on the request, an analysis of the output of the network device.

Clause 13. The network device of any of clauses 8 to 12, wherein the one or more processors are further to: provide, to the large language model and via the interface, a request to analyze traffic associated with the network device; and receive, from the large language model and based on the request, an analysis of the traffic associated with the network device.

Clause 14. The network device of any of clauses 8 to 13, wherein the one or more processors are further to: provide, to the large language model and via the interface, a request for instructions to offload traffic of the network device; and receive, from the large language model and based on the request, instructions that cause the network device to offload the traffic of the network device to another network device.

Clause 15. A computer-readable medium comprising a set of instructions, the set of instructions comprising: one or more instructions that, when executed by one or more processors of a network device, cause the network device to: receive code for generating an interface for communicating with a large language model; generate the interface based on the code, wherein the interface is a natural language interface; provide, to the large language model and via the interface, a question associated with the network device; and receive, from the large language model, an answer to the question associated with the network device.

Clause 16. The computer-readable medium of clause 15, wherein the one or more instructions further cause the network device to: provide, to the large language model and via the interface, a question associated with configuring the network device; and receive, from the large language model, an answer to the question associated with configuring the network device.

Clause 17. The computer-readable medium of clause 15 or 16, wherein the one or more instructions further cause the network device to: provide, to the large language model and via the interface, a request to analyze a route summary of the network device; and receive, from the large language model and based on the request, an analysis of the route summary of the network device.

Clause 18. The computer-readable medium of clause 15, 16 or 17, wherein the one or more instructions further cause the network device to: provide, to the large language model and via the interface, a request for instructions to configure the network device; and receive, from the large language model and based on the request, instructions for configuring the network device.

Clause 19. The computer-readable medium of any of clauses 15 to 18, wherein the one or more instructions further cause the network device to: provide, to the large language model and via the interface, a request to troubleshoot the network device; and receive, from the large language model and based on the request, a response identifying one or more issues associated with the network device.

Clause 20. The computer-readable medium of any of clauses 15 to 19, wherein the one or more instructions further cause the network device to: provide, to the large language model and via the interface, a request to troubleshoot the network device; and receive, from the large language model and based on the request, instructions that cause the network device to correct one or more issues associated with the network device.

The foregoing disclosure provides illustration and description but is not intended to be exhaustive or to limit the implementations to the precise form disclosed. Modifications may be made in light of the above disclosure or may be acquired from practice of the implementations.

As used herein, the term "component" is intended to be broadly construed as hardware, firmware, or a combination of hardware and software. It will be apparent that systems and/or methods described herein may be implemented in different forms of hardware, firmware, and/or a combination of hardware and software. The actual specialized control hardware or software code used to implement these systems and/or methods is not limiting of the implementations. Thus, the operation and behavior of the systems and/or methods are described herein without reference to specific software code - it being understood that software and hardware can be used to implement the systems and/or methods based on the description herein.

Although particular combinations of features are recited in the claims and/or disclosed in the specification, these combinations are not intended to limit the disclosure of various implementations. In fact, many of these features may be combined in ways not specifically recited in the claims and/or disclosed in the specification. Although each dependent claim listed below may directly depend on only one claim, the disclosure of various implementations includes each dependent claim in combination with every other claim in the claim set.

No element, act, or instruction used herein should be construed as critical or essential unless explicitly described as such. Also, as used herein, the articles "a" and "an" are intended to include one or more items and may be used interchangeably with "one or more." Further, as used herein, the article "the" is intended to include one or more items referenced in connection with the article "the" and may be used interchangeably with "the one or more." Furthermore, as used herein, the term "set" is intended to include one or more items (e.g., related items, unrelated items, a combination of related and unrelated items, and/or the like), and may be used interchangeably with "one or more." Where only one item is intended, the phrase "only one" or similar language is used. Also, as used herein, the terms "has," "have," "having," or the like are intended to be open-ended terms. Further, the phrase "based on" is intended to mean "based, at least in part, on" unless explicitly stated otherwise. Also, as used herein, the term "or" is intended to be inclusive when used in a series and may be used interchangeably with "and/or," unless explicitly stated otherwise (e.g., if used in combination with "either" or "only one of').

In the preceding specification, various example embodiments have been described with reference to the accompanying drawings. It will, however, be evident that various modifications and changes may be made thereto, and additional embodiments may be implemented, without departing from the broader scope as set forth in the claims that follow. The specification and drawings are accordingly to be regarded in an illustrative rather than restrictive sense.

## Claims

1. A method, comprising:
receiving, by a network device, code for generating an interface for communicating with a large language model;
generating, by the network device, the interface based on the code;
providing, by the network device, to the large language model, and via the interface, a question associated with the network device; and
receiving, by the network device and from the large language model, an answer to the question associated with the network device.

2. The method of claim 1, further comprising:
providing, to the large language model and via the interface, a request for a translation of an output of the network device to another language; and
receiving, from the large language model and based on the request, the translation of the output to the other language.

3. The method of claim 1 or 2, further comprising:
providing, to the large language model and via the interface, a question associated with configuring the network device; and
receiving, from the large language model, an answer to the question associated with configuring the network device.

4. The method of claim 1, 2 or 3, further comprising:
providing, to the large language model and via the interface, a request to analyze one or more of a route summary of the network device and traffic associated with the network device; and
receiving, from the large language model and based on the request, an analysis of the route summary of the network device and/or an analysis of the traffic associated with the network device.

5. The method of any of claims 1 to 4, further comprising:
providing, to the large language model and via the interface, a request for instructions to configure the network device; and
receiving, from the large language model and based on the request, instructions for configuring the network device.

6. The method of any of claims 1 to 5, further comprising:
providing, to the large language model and via the interface, a request to troubleshoot the network device; and
receiving, from the large language model and based on the request, a response identifying one or more issues associated with the network device.

7. The method of any of claims 1 to 6, further comprising:
providing, to the large language model and via the interface, a request to troubleshoot the network device; and
receiving, from the large language model and based on the request, instructions that cause the network device to correct one or more issues associated with the network device.

8. The method of any of claims 1 to 7, further comprising:
providing, to the large language model and via the interface, a request for instructions to onboard the network device with a network; and
receiving, from the large language model and based on the request, instructions that cause the network device to onboard with the network.

9. The method of any of claims 1 to 8, further comprising:
providing, to the large language model and via the interface, a request to analyze an output of the network device; and
receiving, from the large language model and based on the request, an analysis of the output of the network device.

10. The method of any of claims 1 to 9, wherein the one or more processors are further to:
providing, to the large language model and via the interface, a request for instructions to offload traffic of the network device; and
receiving, from the large language model and based on the request, instructions that cause the network device to offload the traffic of the network device to another network device.

11. The method of any of claims 1 to 10, wherein generating the interface based on the code comprises:
filtering an output of an operational mode command or a configuration mode command to generate the interface for communicating with the large language model.

12. The method of any of claims 1 to 11, wherein the interface is an application programming interface.

13. The method of any of claims 1 to 12, wherein the interface is a natural language interface.

14. A network device, comprising:
one or more memories; and
one or more processors;
the network device configured to carry out the method of any of claims 1 to 13.

15. A computer-readable medium comprising a set of instructions, the set of instructions comprising one or more instructions that, when executed by one or more processors of a network device, cause the network device to become configured to carry out the method of any of claims 1 to 13.
